# FASCICULE DE BREVET EUROPEEN

(11) **EP 0 996 299 B1**
(45) Date de publication et mention de la délivrance du brevet: **27.08.2014**
(21) Numéro de dépôt: 99460061.7
(22) Date de dépôt: 19.10.1999
(51) Int. Cl.: H04W 4/00, H04L 29/06

(54) **Procédé de lancement d'une application par un terminal, sous commande d'un module d'identification d'abonné**
Verfahren zum Aufrufen von Anwenderprogrammen durch ein Endgerät unter Kontrolle des Teilnehmeridentitätsmoduls
Subscriber identity module controlled method for launching applications from a mobile station

(30) Priorité: 22.10.1998 FR 9813455; 04.11.1998 FR 9814044; 04.12.1998 FR 9815502
(43) Date de publication de la demande: 26.04.2000
(73) Titulaire: Société Française du Radiotéléphone-SFR, 75008 Paris (FR)
(72) Inventeur: Beaudou, Patrice M., 92800 Puteaux (FR)
(74) Mandataire: Vidon, Patrice

(56) Documents cités:
- EP-A- 0 626 664
- WO-A-96/25828
- WO-A-97/04609
- WO-A-98/32089
- WO-A-98/42120

## Description

Le domaine de l'invention est celui des systèmes de radiocommunication avec les mobiles. Plus précisément, l'invention concerne le lancement d'une application (ou d'au moins une partie de celle-ci) par un terminal compris dans une station mobile.

Cette station mobile peut notamment, mais non exclusivement, être comprise dans un système de radiocommunication de type GSM (pour "Global System for Mobile communications" en anglais), DCS 1800 (pour "Digital Cellular System 1800 Mhz" en anglais), PCS 1900 (pour "Personal Communication System" en anglais), DECT (pour "Digital European Cordless Télécommunications") en anglais, ou encore UMTS (pour "Universal Mobile Télécommunication System" en anglais).

De façon classique, une station mobile comprend un terminal (ou ME, pour "Mobile Equipment" selon la terminologie GSM) coopérant avec un module d'identification d'abonné (ou SIM, pour "Subscriber Identity Module" selon la terminologie GSM, ou encore DAM, pour "DECT Authentication Module" selon la terminologie DECT). On notera que, selon les systèmes, la station mobile est parfois aussi appelée radiotéléphone mobile ou téléphone portable.

Par ailleurs, la présente invention s'applique à tout type de station mobile, et notamment que celle-ci émette et/ou reçoive de la voix et/ou des données. Dans le cas d'une émission/réception de données, le terminal peut être relié à un micro-ordinateur (portable de préférence), qui traite les données émises/reçues.

De façon connue, le terminal peut généralement exécuter une pluralité d'applications, dites "applications de terminal" dans la suite de la description. Par exemple, le terminal peut exécuter des applications de services (discutées plus en détail ci-dessous), des applications d'édition de messages (telles que par exemple les éditeurs SMS), etc.

Les applications de services, lorsqu'elles sont exécutées, permettent au terminal de bénéficier du(des) service(s) offert(s) par un serveur de services après qu'une communication a été établie entre le terminal et le serveur de services. Il s'agit notamment des navigateurs (ou "browser" en anglais), permettant au terminal de naviguer au sein d'un réseau informatique de type Internet, après qu'une communication entre le terminal et une plate-forme d'accès a été établie, ou encore des applications de paiement et/ou de réservation et/ou de consultation, permettant au terminal de bénéficier d'au moins un service de paiement et/ou de réservation et/ou de consultation offert par un serveur de services, après qu'une communication entre le terminal et le serveur de services a été établie.

Actuellement, la décision d'effectuer le lancement d'une application (ou d'au moins une partie de celle-ci) est toujours prise dans le terminal, soit par le terminal lui-même, "en automatique", soit par l'utilisateur, sous la forme d'un choix (ou proposition) de fonctionnalité. Ce choix est généralement offert à l'utilisateur au sein d'une application principale de terminal, parfois aussi appelée "menu de terminal" ou "menu constructeur", qui permet à l'utilisateur de choisir une fonctionnalité parmi une pluralité de fonctionnalités offertes par le terminal. Le constructeur de terminaux souhaite bien sûr proposer un choix aussi étendu que possible de fonctionnalités dans son "menu constructeur", et conçoit son terminal dans ce but.

Par exemple, il est déjà possible aujourd'hui, avec certaines stations mobiles, d'accéder à un réseau informatique de type Internet. Pour cela, le terminal doit comprendre une touche spécifique ("touche d'accès Internet") permettant le lancement par le terminal d'un "navigateur" (qui est une application de terminal particulière). Au sein du "menu constructeur" d'un tel terminal, l'utilisateur est invité à choisir la fonctionnalité "accès Internet" en appuyant sur la "touche d'accès Internet". La procédure d'accès au réseau mondial Internet est la suivante : après que l'utilisateur a appuyé sur la "touche d'accès Internet", le terminal tente d'établir une communication avec une plateforme d'accès ; si cette communication est effectivement établie, le terminal lance le navigateur, de façon que le terminal puisse naviguer au sein du réseau Internet. En résumé, dans la station mobile, seul le terminal est impliqué puisque c'est lui qui est pourvu de la "touche d'accès Internet", qui tente d'établir la communication avec la plateforme d'accès, et qui lance le navigateur. Le document WO-A-98/32089) décrit un procédé de lancement par une carte SIM d'une application de carte SIM sous commande d'un terminal.

Il apparaît que le fait que la décision d'effectuer le lancement d'une application (ou d'au moins une partie de celle-ci) soit toujours prise dans le terminal présente plusieurs inconvénients.

Tout d'abord, ceci implique que l'utilisateur n'est pas entièrement libre dans le choix de son terminal, puisque c'est du terminal que dépend la possibilité de lancer telle ou telle application de terminal particulière (correspondant à l'offre de telle ou telle fonctionnalité).

Par exemple, dans le cas discuté ci-dessus de l'accès à un réseau informatique de type Internet, l'utilisateur doit impérativement choisir un terminal pourvu de la "touche d'accès Internet". En outre que, quel que soit l'opérateur auprès duquel il s'est abonné, l'utilisateur se voit contraint d'accéder au réseau informatique de type Internet selon des choix techniques effectués par le constructeur de son terminal. Notamment, l'utilisateur ne choisit pas le numéro de la plateforme d'accès, ni les informations utiles au navigateur après qu'il a été lancé, telles que par exemple des numéros de type IP (pour "Internet Protocol" en anglais), des clés secrètes d'authentification du navigateur et/ou de cryptage de données, des numéros de centre de service de messages courts (ou "SMS Center" en anglais), ...

En outre, ceci implique une limitation du nombre de fonctionnalités dont le choix est offert par l'"application opérateur" (ou "application SIM", ou encore "menu opérateur"). On rappelle que le "menu opérateur" est stockée par le module d'identification d'abonné et exécuté par celui-ci. En effet, via le module d'identification d'abonné qu'ils distribuent et qui leur sont spécifiques, les différents opérateurs proposent à leurs abonnés des "menus opérateur" distincts. Chaque opérateur tente bien sûr de proposer un choix maximal de fonctionnalités au sein de son "menu opérateur". Cependant, le "menu opérateur" ne peut proposer que des fonctionnalités qui correspondent à des applications de terminal dont le lancement par le terminal peut être effectué sous commande du module d'identification d'abonné. Les autres fonctionnalités (qui correspondent à des applications de terminal dont le lancement par le terminal ne peut être effectué que sous commande du terminal lui-même) ne peuvent être proposées qu'au sein du "menu constructeur" (déjà discuté ci-dessus).

On notera qu'une même fonctionnalité (par exemple celle d'accès à Internet) peut être proposée par les deux menus "opérateur" et "constructeur".

L'invention a notamment pour objectif de pallier ces différents inconvénients de l'état de la technique.

Plus précisément, l'un des objectifs de la présente invention est de fournir un procédé permettant le lancement d'une application (ou d'au moins une partie de celle-ci) par un terminal, sous commande d'un module d'identification d'abonné.

L'invention a également pour objectif de proposer une ou plusieurs fonctionnalité(s) supplémentaire(s) au sein d'un "menu opérateur", à savoir une ou plusieurs fonctionnalités dont le lancement par le terminal peut être effectué sous commande du module d'identification d'abonné.

Un autre objectif de l'invention est de fournir un tel procédé permettant à un utilisateur d'accéder à un serveur de services à partir d'une station mobile quelconque (en ce sens que cette dernière n'est pas nécessairement pourvue d'une "touche d'accès Internet" telle que précitée). En effet, à la connaissance de l'inventeur, aucun des "menus opérateur" existants ne propose, parmi les choix possibles, la fonctionnalité "accès à un serveur de services" (tel que par exemple "accès Internet").

Un autre objectif de l'invention est de fournir un tel procédé permettant à l'utilisateur d'accéder à un serveur de services selon des choix techniques effectués par son opérateur (et non pas par le constructeur de son terminal).

Un objectif complémentaire de l'invention est de fournir un tel procédé qui soit simple à mettre en oeuvre et peu coûteux. Les objectifs ci-dessus sont obtenus par un procédé, un module d'identification d'abonné et un terminal selon les revendications annexées.

Ces différents objectifs, ainsi que d'autres qui apparaîtront par la suite, sont atteints selon l'invention à l'aide d'un procédé de lancement par un terminal d'au moins une partie d'une application de terminal, sous commande d'un module d'identification d'abonné coopérant avec ledit terminal, ledit module d'identification d'abonné et ledit terminal étant compris dans une station mobile comprise dans un système de radiocommunication,
ledit procédé comprenant les étapes suivantes :
- le module d'identification d'abonné envoie au terminal une commande de lancement par le terminal d'au moins une partie d'une application de terminal ;
- le terminal exécute ladite commande de lancement, de façon à lancer ladite au moins une partie d'une application de terminal et prendre la main.

Le principe général de l'invention consiste donc à amorcer à partir du module d'identification d'abonné (et non pas dans le terminal lui-même) la procédure de lancement par le terminal d'une application de terminal (ou d'une partie de celle-ci). Ceci n'avait jamais été envisagé auparavant car les préjugés de l'homme du métier l'ont toujours incité à penser que c'est le terminal qui doit amorcer un tel lancement, du fait que l'application de terminal se trouve sur le terminal et est exécutée par celui-ci.

Afin de permettre la mise en oeuvre du procédé selon la présente invention, le module d'identification d'abonné doit être capable de générer une commande d'un nouveau type, à savoir une "commande de lancement d'application", et le terminal doit être capable de la reconnaître et l'exécuter.

Après son lancement, l'exécution de l'application de terminal par le terminal est tout à fait classique et ne sera donc pas décrite ici plus en détail.

Dans un premier mode de réalisation particulier de l'invention, ledit procédé comprend les étapes suivantes :
- le module d'identification d'abonné envoie au terminal une commande spécifique de lancement par le terminal d'au moins une partie d'une application de terminal, ladite commande spécifique étant spécifique à ladite au moins une partie d'une application de terminal ;
- le terminal exécute ladite commande spécifique, de façon à lancer ladite au moins une partie d'une application de terminal et prendre la main.

Ainsi, dans ce premier mode de réalisation, on utilise une commande spécifique à l'application (ou à la partie d'application) à lancer.

Avantageusement, ladite commande spécifique appartient à un ensemble comprenant une pluralité de commandes spécifique distinctes, permettant chacune de lancer au moins une partie d'application de terminal distincte.

Préférentiellement, chaque commande spécifique est une nouvelle commande du jeu de commandes du "SIM Application Toolkit". On rappelle que les commandes de ce type incluent un mécanisme d'identification et/ou d'authentification réciproque entre le terminal et le module d'identification d'abonné, et/ou une confirmation par l'utilisateur des commandes passées au terminal (de façon à éviter que le terminal exécute des commandes à l'insu de l'utilisateur). Pour plus de précisions concernant le "SIM Application Toolkit", on pourra se reporter à la norme "GSM 11.14 (Phase 2+)" de l'ETSI, qui est insérée ici par référence.

Dans un second mode de réalisation particulier de l'invention, ledit procédé comprend les étapes suivantes :
- le module d'identification d'abonné envoie au terminal une première commande générique de lancement par le terminal d'une seconde commande spécifique de lancement d'au moins une partie d'une application de terminal, ladite première commande générique étant paramétrée au moins avec un identifiant de ladite seconde commande spécifique, ladite seconde commande spécifique étant spécifique à ladite au moins une partie d'une application de terminal ;
- le terminal exécute ladite première commande générique, de façon à extraire ladite seconde commande spécifique, puis exécute ladite seconde commande spécifique, de façon à lancer ladite au moins une partie d'une application de terminal et prendre la main.

Ainsi, dans ce second mode de réalisation, on utilise une première commande générique, dans laquelle est "encapsulée" une seconde commande spécifique à l'application (ou à la partie d'application) à lancer.

Avantageusement, ladite seconde commande spécifique appartient à un ensemble comprenant une pluralité de secondes commandes spécifiques distinctes, permettant chacune de lancer au moins une partie d'application de terminal distincte.

Préférentiellement, ladite seconde commande spécifique est une commande "AT". En d'autres termes, il s'agit d'une nouvelle et astucieuse utilisation de commandes AT existantes ou à développer. Ainsi, on supprime ou on réduit le coût de développement de nouvelles commandes. On rappelle que les "commandes AT" (pour "ATtention command" en langue anglaise) sont prévues à l'origine pour permettre à un TE ("Terminal Equipment", par exemple un ordinateur) d'exiger d'un ME ("Mobile Equiment", ou terminal de radiocommunication) auquel il est relié d'exécuter certaines actions prédéterminées. Pour plus de précisions concernant ces "commandes AT", on pourra se reporter d'une part à la norme "GSM 07.07" de l'ETSI et d'autre part à la recommandation V25ter de l'ITU-T, qui sont insérées ici par référence. Il convient également de rappeler que certaines commandes AT ont été développées par différents constructeurs et ne sont pas normalisées (elles sont dites "propriétaires").

De façon préférentielle, ladite première commande générique est une nouvelle commande du jeu de commandes du "SIM Application Toolkit".

Préférentiellement, ladite étape d'envoi au terminal par le module d'identification d'abonné de la commande de lancement est associée à un choix d'une fonctionnalité supplémentaire, ledit choix étant offert à un utilisateur lors de l'exécution par le module d'identification d'abonné d'une application opérateur, ladite étape d'envoi étant effectuée si l'utilisateur valide ledit choix de fonctionnalité associé. Ainsi, l'application opérateur (ou "menu opérateur") peut proposer une ou plusieurs nouvelles fonctionnalités.

Avantageusement, ladite application de terminal dont au moins une partie est lancée par le terminal appartient au groupe comprenant :
- les applications de services, dont l'exécution permet au terminal de bénéficier du(des) service(s) offert(s) par un serveur de services après qu'une communication a été établie entre ledit terminal et ledit serveur de services ;
- les applications d'édition de messages ;
- les applications d'édition d'agendas.

Cette liste est nullement exhaustive. Parmi les applications d'édition d'agendas, notamment pour les agendas d'abonné (ADN, pour "Abreviated Dialling Numbers" en anglais, ou FDN, pour "Fixed Dialling Numbers") et les agendas d'opérateur (SDN, pour "Services Dialling Numbers").

On notera que dans le cas d'un accès à un serveur de services (avec lancement d'une application de services), la mise en oeuvre du procédé de l'invention n'impose nullement que le terminal soit pourvu d'une "touche d'accès à un serveur de services".

Parmi lesdites applications de services, on distingue avantageusement notamment :
- les navigateurs, permettant au terminal de naviguer au sein d'un réseau informatique de type Internet, après qu'une communication entre le terminal et une plate-forme d'accès a été établie ;
- les applications de paiement et/ou de réservation et/ou de consultation, permettant au terminal de bénéficier d'au moins un service de paiement et/ou de réservation et/ou de consultation offert par un serveur de services, après qu'une communication entre le terminal et le serveur de services a été établie.

Avantageusement, dans le cas où l'application de terminal est une application de services, ladite commande spécifique est paramétrée avec un jeu de paramètres comprenant :
- un identifiant d'un numéro de téléphone d'un serveur de services, et
- éventuellement, au moins un paramètre d'appel,
et l'étape d'exécution par le terminal de ladite commande spécifique comprend les étapes suivantes :
- le terminal tente d'établir une communication avec ledit serveur de services, selon ledit jeu de paramètre(s) ;
- si ladite communication avec le serveur de services est effectivement établie, le terminal lance l'exécution de ladite au moins une partie de l'application de services, de façon que le terminal puisse bénéficier du(des) service(s) offert(s) par ledit serveur de services.

L'invention concerne également un module d'identification d'abonné, du type compris dans une station mobile d'un système de radiocommunication et coopérant avec un terminal, comprenant des moyens permettant la mise en oeuvre du procédé précité de lancement par ledit terminal d'au moins une partie d'une application de terminal, sous commande dudit module d'identification d'abonné.

L'invention concerne aussi un terminal, du type compris dans une station mobile d'un système de radiocommunication et coopérant avec un module d'identification d'abonné, comprenant des moyens permettant la mise en oeuvre du procédé précité de lancement par ledit terminal d'au moins une partie d'une application de terminal, sous commande dudit module d'identification d'abonné.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'une station mobile permettant la mise en oeuvre du procédé selon l'invention ;
- la figure 2 présente un schéma synoptique global permettant d'expliquer une application particulière du procédé selon l'invention, dans le cas où l'application de terminal à lancer est une application de services nécessitant l'établissement d'une communication entre le terminal et un serveur de services ; et
- la figure 3 présente, de façon partielle, un exemple de contenu de la zone mémoire du module d'identification d'abonné apparaissant sur la figure 1, dans le cas de l'application particulière explicitée avec la figure 2.

L'invention concerne donc un procédé de lancement d'une application de terminal (ou d'au moins une partie de celle-ci) par un terminal3 compris dans une station mobile 2 appartenant à un système de radiocommunication.

Dans un souci de simplification, on parle dans la suite de la description uniquement de "lancement d'une application de terminal". Il est clair cependant que cette expression peut systématiquement être remplacée par "lancement d'une partie d'une application de terminal", tout en restant dans le cadre de l'invention.

Dans la suite de la description, on considère le cas particulier d'un système de radiocommunication de type GSM. Il est clair cependant que la présente invention n'est pas limitée à ce type de système de radiocommunication.

On rappelle qu'une station mobile 2 (ou MS, pour "Mobile Station", selon la terminologie GSM) comprend un terminal 3 (ou ME, pour "Mobile Equipment", selon la terminologie GSM) coopérant avec un module d'identification d'abonné 4 (ou SIM, pour "Subscriber Identity Module", selon la terminologie GSM). Pour plus de précisions sur le terminal 3 et le module d'identification d'abonné 4, on pourra se reporter aux normes "GSM 11.11 et GSM 11.14 (Phase 2+)" de l'ETSI, qui sont insérées ici par référence.

On suppose que le terminal 3 peut exécuter différentes applications de terminal, permettant chacune d'offrir une fonctionnalité distincte à l'utilisateur. Ce sont par exemple :
- application n°1 (fonctionnalité n°1) : une application de navigation (ou "navigateur") 31, permettant au terminal 3 de naviguer au sein d'un réseau informatique de type Internet, après qu'une communication entre le terminal et une plate-forme d'accès a été établie ;
- application n°2 (fonctionnalité n°2) : une application de paiement et/ou de réservation et/ou de consultation 32, permettant au terminal de bénéficier d'au moins un service de paiement et/ou de réservation et/ou de consultation offert par un serveur de services, après qu'une communication entre le terminal et le serveur de services a été établie ;
- application n°3 (fonctionnalité n°3) : une application d'édition de messages (par exemple un "éditeur SMS") 33, permettant au terminal d'afficher sur un écran du terminal des messages courts préalablement reçu d'un centre SMS.

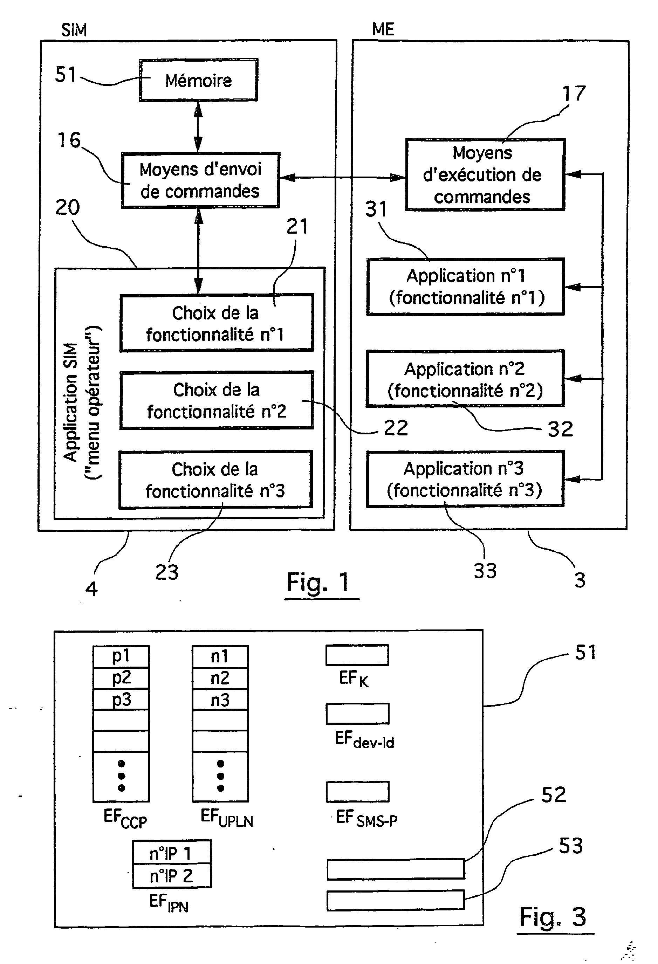

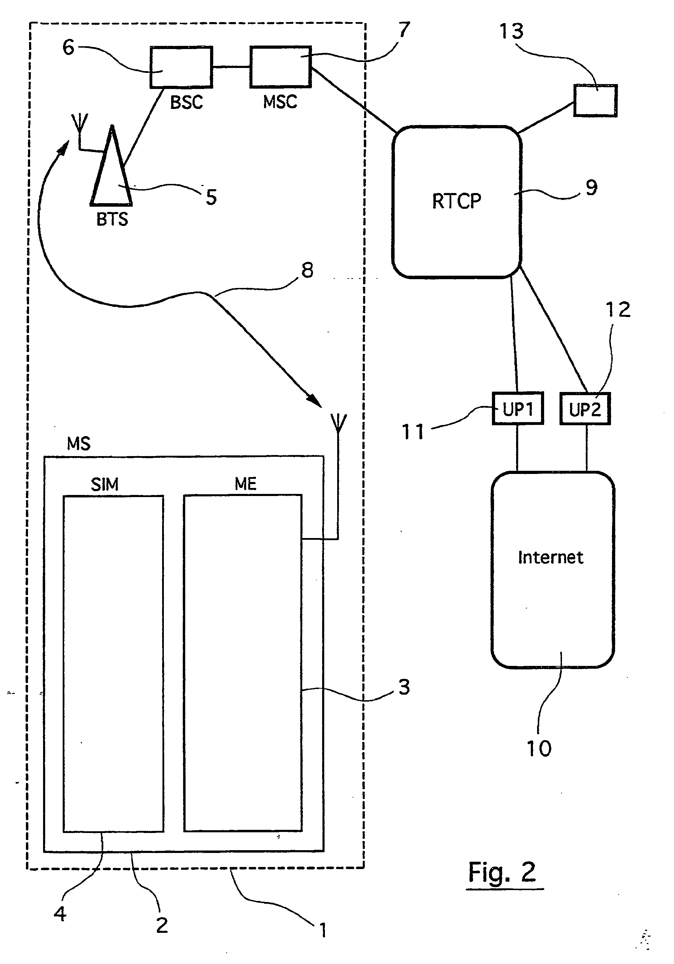

Le cas des deux applications de services 31, 32 est décrit plus en détail par la suite, en relation avec les figures 2 et 3.

On suppose par ailleurs que le module d'identification d'abonné 4 peut exécuter un "menu opérateur" 20 (ou "application SIM"). En d'autres termes, on suppose que le terminal 3 et le module d'identification d'abonné 4 sont du type pouvant mettre en oeuvre le "SIM Application Toolkit", tel que décrit en détail dans la norme "GSM 11.14 (Phase 2+)" de l'ETSI (qui est insérée ici par référence). Le module d'identification d'abonné 4 est alors qualifié de "proactive SIM", selon la terminologie GSM. En résumé, le "SIM Application Toolkit" est un jeu de commandes et de procédures permettant au module d'identification d'abonné 4 de "prendre la main" et d'envoyer des commandes au terminal 3.

Dans le mode de réalisation particulier de l'invention présenté à titre d'exemple, le "menu opérateur" 20 propose à l'utilisateur différentes fonctionnalités (choix référencés 21 à 23) correspondant chacune à l'exécution par le terminal 3 d'une application de terminal distincte 31 à 33.

Plus précisément, la validation par l'utilisateur, au sein du "menu opérateur", de l'un des choix de fonctionnalité possibles 21 à 23 entraîne l'exécution des étapes suivantes :
- le module d'identification d'abonné 4 envoie au terminal 3 une commande de lancement par le terminal de l'application de terminal concernée (c'est-à-dire de celle des applications de terminal 31 à 33 qui correspond au choix validé) ;
- le terminal 3 exécute cette commande de lancement, de façon à lancer l'application de terminal concernée et prendre la main.

Par exemple, si l'utilisateur fait le choix de la fonctionnalité n°1 dans le "menu opérateur", ce choix se traduit par le lancement du navigateur 31. De même, le choix de la fonctionnalité n°2 se traduit par le lancement de l'application de paiement et/ou de réservation et/ou de consultation 32. Enfin, le choix de la fonctionnalité n°3 se traduit par le lancement de l'éditeur SMS 33.

Le module d'identification d'abonné 4 et le terminal 3 comprennent des moyens spécifiques permettant la mise en oeuvre de ces étapes. Ainsi, le module d'identification d'abonné 4 comprend des moyens 16 d'envoi au terminal 3 de commandes de lancement. Par ailleurs, le terminal 3 comprend des moyens 17 d'exécution des commandes de lancement précitées. Ces moyens d'envoi 16 et d'exécution 17 sont par exemple construits autour d'un microprocesseur.

On présente maintenant successivement deux variantes de réalisation du procédé selon l'invention, se différenciant par la nature de la commande de lancement envoyée par le module d'identfication d'abonné 4 au terminal 3.

Selon la première variante de réalisation, la commande envoyée au terminal 3 par le module d'identification d'abonné 4 est spécifique à l'application à lancer.

En reprenant l'exemple précité, le module d'identification d'abonné 4 dispose de trois commandes spécifiques distinctes, permettant le lancement par le terminal des applications n°1, 2 et 3 respectivement (référencées 31 à 33). Ces trois commandes spécifiques, qui peuvent être de nouvelles commandes du jeu de commandes du "SIM Application Toolkit", s'écrivent par exemple :
"Run Application i (P)"
avec 1_ i _3 (il est clair cependant qu'il s'agit d'un exemple et que, d'une façon générale, i peut prendre d'autres valeurs, et P un jeu de paramètres optionnel, par exemple des paramètres d'appel sous la forme (p_{1,i}, p_{2,i}, ...).

Selon la seconde variante de réalisation, la commande envoyée au terminal 3 par le module d'identification d'abonné 4 est une première commande générique, elle-même paramétrée avec une seconde commande spécifique à l'application à lancer. La première commande est générique en ce sens qu'elle permet de lancer, une par une, différentes secondes commandes, spécifiques chacune à une application à lancer distincte. Le terminal exécute d'abord la première commande générique, afin d'en extraire la seconde commande spécifique, puis exécute la seconde commande spécifique, de façon à lancer l'application de terminal et prendre la main.

En reprenant l'exemple précité, le module d'identification d'abonné 4 dispose d'une première commande générique pouvant être paramétrée avec l'une quelconque de trois secondes commandes spécifiques distinctes, permettant le lancement par le terminal des applications n°1, 2 et 3 respectivement (référencées 31 à 33).

La première commande générique, qui peut être une nouvelle commande du jeu de commandes du "SIM Application Toolkit", s'écrit par exemple :
"Run AT Command (C)",
avec C une des trois secondes commandes AT spécifiques suivantes :
"Run Application i (P)", 1 _ i _ 3,
avec P un jeu de paramètres optionnel, par exemple des paramètres d'appel sous la forme (p_{1,i}, p_{2,i}, ...).

On rappelle maintenant, en relation avec les figures 2 et 3, le principe général d'un accès à un serveur de services à partir d'une station mobile 2, avant de présenter une application particulière du procédé selon l'invention. Cette application particulière correspond au cas où l'application de terminal à lancer est une application de services nécessitant l'établissement d'une communication entre le terminal et un serveur de services.

Le schéma synoptique de la figure 1 présente la structure d'un système de radiocommunication 1 de type GSM. Une pluralité de stations mobiles 2 évoluent au sein d'un réseau de cellules géographiques (non représentées). Chaque cellule correspond à la couverture radio d'une station de base 5 (ou BTS, pour "Base Transceiver Station", selon la terminologie GSM). La station mobile 2 communique, via l'interface air 8, avec la station de base 5 de la cellule où elle se trouve. Les stations de base sont gérées par un contrôleur de stations de base 6 (ou BSC, pour "Base Station Controller", selon la terminologie GSM). Plusieurs contrôleur de stations de base 6 peuvent être pilotés par un central de commutation 7 (ou MSC, pour "Mobile Service Switching Center", selon la terminologie GSM), qui est l'élément maître d'un réseau GSM. Le central de commutation 7 est relié au réseau téléphonique commuté public 9 (RTCP). On notera que, par souci de simplification, un seul de chacun des types d'éléments 2, 5, 6 et 7 de la structure est représenté sur la figure 1.

D'une façon générale, et connue en soi, afin de pouvoir accéder à un serveur de services donné, le terminal doit pouvoir exécuter une application de services, spécifique à ce serveur de services donné et permettant au terminal de bénéficier du ou des services offerts par ce serveur de services donné. A titre d'exemple, sur la figure 1, on suppose qu'il existe :
- deux plateformes d'accès 11 (UP1), 12 (UP2), qui sont deux serveurs de services particuliers offrant chacun un service d'accès à un réseau informatique de type Internet 10 ;
- un serveur 13 de paiement et/ou de réservation et/ou de consultation.

On rappelle qu'une plate-forme d'accès permet à l'utilisateur de naviguer au sein du réseau informatique de type Internet, c'est-à-dire d'accéder à d'autres serveurs présents sur ce réseau informatique de type Internet. Ces autres serveurs, généralement appelés "serveurs Internet", supportent des "sites Web" et offrent chacun au moins un service de paiement (gestion d'un compte bancaire, transactions, ...) et/ou de réservation (billets de train, d'avion, de spectacles, ...) et/ou de consultation (météo, horaires, ...).

On rappelle par ailleurs qu'un serveur 13 de paiement et/ou de réservation et/ou de consultation présente une offre de services de même nature que les serveurs Internet précités, mais se distingue de ces derniers en ce qu'il est accessible directement et non pas via une plate-forme d'accès. En d'autres termes, le second type de serveur de services n'est pas un serveur Internet, et n'est donc pas accessible à travers le réseau informatique de type Internet.

Dans la présente description, par réseau informatique de type Internet, on entend non seulement le réseau mondial baptisé "Internet" (qui est un réseau interconnectant de très nombreuses machines et actuellement en très forte expansion), mais également tout type de réseau informatique et/ou de télécommunication mettant en oeuvre la technologie internet. On rappelle en effet que le réseau Internet (le réseau mondial), n'est pas le seul type de réseau de télécommunication mettant en oeuvre la technologie internet. Notamment, une organisation peut parfaitement déployer son propre réseau, généralement appelé "réseau Intranet", sur la base de la technologie internet, sans pour autant être connectée au réseau Internet (le réseau mondial).

Dans la suite de la description, à titre d'exemple illustratif et non limitatif, on présente en détail uniquement le cas d'un accès à une plate-forme d'accès 11, 12. Il est clair cependant que le mécanisme d'accès décrit ci-après s'applique également au cas d'un accès à n'importe quel type de serveur de services, et notamment à un serveur offrant un ou plusieurs services de paiement et/ou de réservation et/ou de consultation.

Afin d'accéder à une plate-forme d'accès, et à travers celle-ci, à un réseau informatique de type Internet 10, l'application de services que le terminal 3 doit exécuter est un navigateur 31 ("browser"). On utilise par exemple le navigateur commercialisé par la société Unwired Planet, sous le nom de produit "UP.browser" (marque déposée). De façon classique, le navigateur 31 utilise un langage spécifique et permet au terminal 3 de naviguer au sein du réseau informatique de type Internet (c'est-à-dire de se connecter à des "sites Web" afin de pouvoir échanger avec eux tous types d'informations). Préalablement à cette "navigation", le terminal 3 doit avoir établi une communication avec une plateforme d'accès à ce réseau informatique de type Internet 10. On rappelle que dans l'exemple présenté, deux plateformes d'accès 11 (UP1), 12 (UP2) sont disponibles. Il s'agit par exemple de plateformes du type commercialisé par la société Unwired Planet, sous le nom de produit "UP.link" (marque déposée).

Le langage spécifique utilisé par le navigateur 31 est par exemple le langage "WAP/HDML" (pour "Wireless Application Protocol / Handled Device Mark-up Language" en anglais). Pour plus de précisions concernant ce langage, et plus généralement les concepts WAP et HDML (marque déposée), on pourra se reporter aux documents suivants, insérés ici par référence :
- concernant HDML (ces documents sont consultables sur l'URL "http://www.uplanet.com") :
   * "HDML Specification" (spécification HDML), version 2.0, 11 avril 1997 ;
   * "UP.Link (marque déposée) administration guide", version 3.0, avril 1998 ;
- concernant WAP (ces documents sont consultables sur l'URL "http://www.wapforum.org/") :
   * "WAP Architecture Specification", WAP Forum, 30 avril 1998 ;
   * Wireless Transport Layer Security Specification", WAP Forum, 30 avril 1998 ;
   * WML Script Language Specification", WAP Forum, 9 avril 1998 ;
   * WAP Security Smart Card", draft version 0.1 (1998-06).

D'une façon générale, l'application de services (exécutée par le terminal) peut être écrite dans un langage quelconque, tel que par exemple le langage JAVA (marque déposée).

Il est clair qu'un même serveur de services peut être accessible de différentes manières, correspondant chacune à un jeu de paramètre distinct. En effet, un même serveur de services peut posséder plusieurs numéros de téléphone, ou, sous un même numéro, accepter différents modes de transmission.

Selon la présente invention, le module d'identification d'abonné 3 envoie au terminal (directement ou en paramètre d'une commande générique) une commande spécifique de lancement par le terminal du navigateur. Cette commande spécifique est paramétrée avec un jeu de paramètres comprenant un identifiant d'un numéro de téléphone d'une plate-forme d'accès et une pluralité de paramètres d'appel (définissant par exemple un mode de transmission prédéterminé). Lorsqu'il reçoit cette commande spécifique, le terminal tente d'établir une communication avec la plate-forme d'accès, selon le jeu de paramètres précité. Si la communication avec la plate-forme d'accès est effectivement établie, le terminal lance le navigateur, de façon que le terminal puisse naviguer au sein du réseau informatique de type Internet.

On présente maintenant successivement chacune des étapes de ce mode de réalisation particulier du procédé selon l'invention.

Etape 1 : par exemple lors de chacune (ou seulement certaines) de ses initialisations, le terminal 3 lit, dans une zone mémoire 51 du module d'identification d'abonné 4, une liste prédéterminée de jeux de paramètres, comprenant chacun un numéro de téléphone d'un serveur de services, un mode de transmission, et éventuellement d'autre(s) paramètre(s) d'appel. Un exemple de structure de la zone mémoire 51 est présenté en détail par la suite, en relation avec la figure 3.

Etape 2 : le module d'identification d'abonné 4 envoie au terminal 3 (directement ou en paramètre d'une commande générique) une commande spécifique, demandant au terminal 3 de lancer le navigateur. Cette commande spécifique est paramétrée avec un premier jeu de paramètres.

Etape 3 : lorsqu'il reçoit cette commande spécifique, le terminal tente d'établir une communication avec la plate-forme d'accès, selon les indications du premier jeu de paramètres. Il s'agit par exemple d'établir une communication avec la première plate-forme UP1, en mode numérique.

Etape 4 : si la communication est effectivement établie, le terminal 3 lance le navigateur, de façon à pouvoir naviguer au sein du réseau informatique de type Internet ;

Etape 5 : le serveur de services (UP1 dans l'exemple précité) authentifie le module d'identification d'abonné 4.

On présente maintenant, en relation avec la figure 3, un exemple de contenu de la zone mémoire 51 du module d'identification d'abonné 4.

Comme expliqué précédemment (cf étape 1), cette zone mémoire 51 stocke les éléments constitutifs des jeux de paramètres permettant de paramétrer la commande spécifique de lancement du navigateur (ou plus généralement d'une application de services). On rappelle que ces éléments constitutifs comprennent par exemple :
- la liste des numéros de serveurs de services (n1, n2, n3, ...). Dans le cas de plate-formes d'accès UP, ces numéros sont par exemple stockés dans un fichier élémentaire EF_{UPLN} (pour "Elementary File_{UP Link Number}" en anglais) ;
- la liste des paramètres d'appels (p1, p2, p3, ...) (par exemple les modes de transmission (mode numérique, mode analogique, ...) correspondant aux divers numéros de serveurs de services. Ces paramètres d'appels sont par exemple stockés dans un fichier élémentaire EF_{CCP} (pour "Elementary File_{Capability Configuration Parameters}" en anglais) de la zone mémoire 51. De même que les numéros de plateforme, ces paramètres sont destinés à être lus au préalable par le terminal (lors de l'étape 1).

Optionnellement, on peut prévoir que la zone mémoire 51 du module d'identification d'abonné 4 (et non pas le terminal 3) stocke également des informations utiles au navigateur 31 après qu'il a été lancé. Il peut s'agir, par exemple :
- de numéros de type IP, stockés dans un fichier élémentaire EF_{IPN} (pour "Elementary File_{Internet Protocol Number}" en anglais) ;
- d'une clé secrète d'authentification du navigateur et/ou de cryptage de données sur le réseau informatique de type Internet, stockée dans un fichier élémentaire EF_{K} (pour "Elementary File_{Key}" en anglais). Cette clé secrète est utilisée lors de chaque session entre le navigateur et une des plateformes d'accès ;
- d'un identificateur de l'utilisateur auprès de chaque plateforme d'accès, stocké dans un fichier élémentaire EF_{dev_Id} (pour "Elementary File_{device_Identifier}" en anglais) ;
- de numéros de centre de services de messages courts, stockés dans un fichier élémentaire EF_{SMS-P} (pour "Elementary File_{Short Message Service - Parameters}" en anglais) ;
- etc.

## Revendications

1. Procédé de lancement par un terminal (3) d'au moins une partie d'une application de terminal (31 à 33), sous commande d'un module d'identification d'abonné (4) coopérant avec ledit terminal, ledit module d'identification d'abonné et ledit terminal étant compris dans une station mobile (2) comprise dans un système de radiocommunication (1), ledit module d'identification d'abonné étant distribué par un opérateur,
ledit procédé comprenant les étapes suivantes :
- lors de l'exécution par le module d'identification d'abonné (4) d'une application opérateur (20), aussi appelée « menu opérateur », le module d'identification d'abonné propose à un utilisateur de choisir au moins une fonctionnalité (21 à 23), chaque fonctionnalité correspondant à un lancement par le terminal d'une application de terminal distincte en utilisant des paramètres de l'opérateur qui sont associés à ladite fonctionnalité, qui sont stockés dans le module d'identification d'abonné et qui correspondent à des choix techniques effectués par l'opérateur ;
- si l'utilisateur choisit une fonctionnalité, le module d'identification d'abonné envoie au terminal une commande de lancement d'application, paramétrée avec les paramètres de l'opérateur associés à la fonctionnalité choisie, afin que le terminal lance au moins une partie de l'application de terminal à laquelle correspond la fonctionnalité choisie, en utilisant les paramètres de l'opérateur associés à la fonctionnalité choisie ;
- le terminal exécute la commande de lancement d'application qu'il reçoit, de façon à lancer ladite au moins une partie de l'application de terminal à laquelle correspond la fonctionnalité choisie, en utilisant les paramètres de l'opérateur associés à la fonctionnalité choisie, et prendre la main.

2. Procédé selon la revendication 1, **caractérisé en ce qu'**il comprend les étapes suivantes :
- le module d'identification d'abonné (4) envoie au terminal (3) une commande spécifique de lancement d'application, ladite commande spécifique étant spécifique à ladite au moins une partie de l'application de terminal à laquelle correspond la fonctionnalité choisie ;
- le terminal exécute ladite commande spécifique, de façon à lancer ladite au moins une partie de l'application de terminal à laquelle correspond la fonctionnalité choisie, et prendre la main.

3. Procédé selon la revendication 2, **caractérisé en ce que** ladite commande spécifique appartient à un ensemble comprenant une pluralité de commandes spécifique distinctes, permettant chacune de lancer au moins une partie d'application de terminal distincte.

4. Procédé selon l'une quelconque des revendications 2 et 3, **caractérisé en ce que** chaque commande spécifique est une nouvelle commande du jeu de commandes du "SIM Application Toolkit".

5. Procédé selon la revendication 1, **caractérisé en ce qu'**il comprend les étapes suivantes :
- le module d'identification d'abonné (4) envoie au terminal (3) une première commande générique de lancement d'application, afin que le terminal lance une seconde commande spécifique de lancement d'application, ladite première commande générique étant paramétrée au moins avec un identifiant de ladite seconde commande spécifique, ladite seconde commande spécifique étant spécifique à ladite au moins une partie de l'application de terminal à laquelle correspond la fonctionnalité choisie ;
- le terminal exécute ladite première commande générique, de façon à extraire ladite seconde commande spécifique, puis exécute ladite seconde commande spécifique, de façon à lancer ladite au moins une partie de l'application de terminal à laquelle correspond la fonctionnalité choisie, et prendre la main.

6. Procédé selon la revendication 5, **caractérisé en ce que** ladite seconde commande spécifique appartient à un ensemble comprenant une pluralité de secondes commandes spécifiques distinctes, permettant chacune de lancer au moins une partie d'application de terminal distincte.

7. Procédé selon l'une quelconque des revendications 5 et 6, **caractérisé en ce que** ladite seconde commande spécifique est une commande "AT".

8. Procédé selon l'une quelconque des revendications 5 à 7, **caractérisé en ce que** ladite première commande générique est une nouvelle commande du jeu de commandes du "SIM Application Toolkit".

9. Procédé selon l'une quelconque des revendications 1 à 8, **caractérisé en ce que** ladite application de terminal (31 à 33) dont au moins une partie est lancée par le terminal (3) appartient au groupe comprenant :
- les applications de services (31, 32), dont l'exécution permet au terminal de bénéficier du(des) service(s) offert(s) par un serveur de services après qu'une communication a été établie entre ledit terminal et ledit serveur de services ;
- les applications d'édition de messages (33) ;
- les applications d'édition d'agendas.

10. Procédé selon la revendication 9, **caractérisé en ce que** parmi lesdites applications de services on distingue notamment :
- les navigateurs (31), permettant au terminal (3) de naviguer au sein d'un réseau informatique de type Internet (10), après qu'une communication entre le terminal et une plate-forme d'accès (11, 12) a été établie ;
- les applications de paiement et/ou de réservation et/ou de consultation (32), permettant au terminal (3) de bénéficier d'au moins un service de paiement et/ou de réservation et/ou de consultation offert par un serveur de services (13), après qu'une communication entre le terminal et le serveur de services a été établie.

11. Procédé selon l'une quelconque des revendications 2 à 10, ladite application de terminal (20) étant une application de services, **caractérisé en ce que** ladite commande spécifique est paramétrée avec un jeu de paramètres comprenant :
- un identifiant d'un numéro de téléphone d'un serveur de services (11 à 13), et
- éventuellement, au moins un paramètre d'appel,
et **en ce que** l'étape d'exécution par le terminal (3) de ladite commande spécifique comprend les étapes suivantes :
- le terminal tente d'établir une communication avec ledit serveur de services (11 à 13), selon ledit jeu de paramètre(s) ;
- si ladite communication avec le serveur de services (11 à 13) est effectivement établie, le terminal (3) lance l'exécution de ladite au moins une partie de l'application de services (31, 32), de façon que le terminal puisse bénéficier du(des) service(s) offert(s) par ledit serveur de services.

12. Module d'identification d'abonné (4), du type compris dans une station mobile (2) d'un système de radiocommunication (1) et coopérant avec un terminal (3), **caractérisé en ce qu'**il comprend des moyens (16) permettant la mise en oeuvre du procédé, selon l'une quelconque des revendications 1 à 11, de lancement par ledit terminal d'au moins une partie d'une application de terminal (31 à 33), sous commande dudit module d'identification d'abonné (4).

13. Terminal (3), du type compris dans une station mobile (2) d'un système de radiocommunication (1) et coopérant avec un module d'identification d'abonné (4), **caractérisé en ce qu'**il comprend des moyens (17) permettant la mise en oeuvre du procédé, selon l'une quelconque des revendications 1 à 11, de lancement par ledit terminal (3) d'au moins une partie d'une application de terminal (31 à 33), sous commande dudit module d'identification d'abonné (4).

## Patentansprüche

1. Verfahren zum Starten mindestens eines Teil einer Terminalanwendung (31 bis 33) durch ein Terminal (3) unter Steuerung eines Teilnehmeridentifizierungsmoduls (4), das mit dem Terminal zusammenwirkt, wobei das Teilnehmeridentifizierungsmodul und das Terminal in einer mobilen Station (2) enthalten sind, die in einem Funkkommunikationssystem (1) enthalten ist, wobei das Teilnehmeridentifizierungsmodul von einem Bediener ausgegeben wird, wobei das Verfahren folgende Schritte aufweist:
- bei der Ausführung durch das Teilnehmeridentifizierungsmodul (4) einer Bedieneranwendung (20), auch "Bedienermenü" genannt, schlägt das Teilnehmeridentifizierungsmodul einem Benutzer vor, mindestens eine Funktion (21 bis 23) auszuwählen, wobei jede Funktion einem Starten einer unterschiedlichen Terminalanwendung durch das Terminal unter Verwendung von Parametern des Bedieners, die mit der Funktion verknüpft sind, die in dem Teilnehmeridentifizierungsmodul gespeichert sind und die den vom Bediener getroffenen technischen Festlegungen entsprechen, entspricht;
- falls der Benutzer eine Funktion wählt, schickt das Teilnehmeridentifizierungsmodul einen Befehl zum Starten der Anwendung an das Terminal, welcher mit den Parametern des Bedieners, die mit der gewählten Funktion verknüpft sind, parametrisiert ist, damit das Terminal mindestens einen Teil der Terminalanwendung, der die gewählte Funktion entspricht, startet, indem die Parameter des Bedieners, die mit der gewählten Funktion verknüpft sind, verwendet werden;
- das Terminal führt den Befehl zum Starten der Anwendung, den es erhält, aus, um mindestens einen Teil der Terminalanwendung, der die gewählte Funktion entspricht, zu starten, indem die Parameter des Bedieners, die mit der gewählten Funktion verknüpft sind, verwendet werden und um zuzugreifen.

2. Verfahren nach Anspruch 1, **dadurch gekennzeichnet, dass** es folgende Schritte umfasst:
- das Teilnehmeridentifizierungsmodul (4) schickt einen spezifischen Befehl zum Starten der Anwendung an das Terminal (3), wobei der spezifische Befehl für mindestens einen Teil der Terminalanwendung, der die gewählte Funktion entspricht, spezifisch ist;
- das Terminal führt den spezifischen Befehl aus, um den mindestens einen Teil der Terminalanwendung, der die gewählte Funktion entspricht, zu starten und zuzugreifen.

3. Verfahren nach Anspruch 2, **dadurch gekennzeichnet, dass** der spezifische Befehl zu einer Einheit gehört, die mehrere unterschiedliche spezifische Befehle umfasst, wobei jede es ermöglicht, mindestens einen Teil einer unterschiedlichen Terminalanwendung zu starten.

4. Verfahren nach einem der Ansprüche 2 und 3, **dadurch gekennzeichnet, dass** jeder spezifische Befehl ein neuer Befehl aus dem Befehlssatz des "SIM Application Toolkit" ist.

5. Verfahren nach Anspruch 1, **dadurch gekennzeichnet, dass** es folgende Schritte umfasst:
- das Teilnehmeridentifizierungsmodul (4) schickt einen ersten generischen Befehl zum Starten der Anwendung an das Terminal (3), damit das Terminal einen zweiten spezifischen Befehl zum Starten der Anwendung startet, wobei der erste generische Befehl mindestens mit einer Kennung des zweiten spezifischen Befehls parametrisiert ist, wobei der zweite spezifische Befehl für mindestens einen Teil der Terminalanwendung, der die gewählte Funktion entspricht, spezifisch ist;
- das Terminal führt den ersten generischen Befehl aus, um den zweiten spezifischen Befehl zu extrahieren, dann führt er den zweiten spezifischen Befehl aus, um den mindestens einen Teil der Terminalanwendung, der die gewählte Funktion entspricht, zu starten und zuzugreifen.

6. Verfahren nach Anspruch 5, **dadurch gekennzeichnet, dass** der zweite spezifische Befehl zu einer Einheit gehört, die mehrere unterschiedliche zweite spezifische Befehle umfasst, wobei jeder es ermöglicht, mindestens einen Teil einer unterschiedlichen Terminalanwendung zu starten.

7. Verfahren nach einem der Ansprüche 5 und 6, **dadurch gekennzeichnet, dass** der zweite spezifische Befehl ein "AT"-Befehl ist.

8. Verfahren nach einem der Ansprüche 5 bis 7, **dadurch gekennzeichnet, dass** der erste generische Befehl ein neuer Befehl aus dem Befehlssatz des "SIM Application Toolkit" ist.

9. Verfahren nach einem der Ansprüche 1 bis 8, **dadurch gekennzeichnet, dass** die Terminalanwendung (31 bis 33), von der mindestens ein Teil von dem Terminal (3) gestartet wird, zu der Gruppe gehört, die Folgendes umfasst:
- die Dienstanwendungen (31, 32), deren Ausführung es dem Terminal ermöglicht, den/die Dienst(e) zu nutzen, der/die von einem Dienstserver angeboten wird/werden, nachdem eine Kommunikation zwischen dem Terminal und dem Dienstserver hergestellt wurde;
- die Anwendungen zur Bearbeitung von Nachrichten (33);
- die Anwendungen zur Bearbeitung von Terminkalendern.

10. Verfahren nach Anspruch 9, **dadurch gekennzeichnet, dass** unter den Dienstanwendungen insbesondere unterschieden wird zwischen:
- den Browsern (31), mit denen das Terminal (3) in einem Computernetzwerk vom Typ Internet (10) navigieren kann, nachdem eine Kommunikation zwischen dem Terminal und einer Zugangsplattform (11, 12) eingerichtet wurde;
- die Anwendungen zur Zahlung und/oder zur Reservierung und/oder zur Beratung (32), durch die das Terminal (3) mindestens einen Zahlungs- und/oder Reservierungs- und/oder Beratungsdienst, der von einem Dienstserver (13) angeboten wird, nutzen kann, nachdem eine Kommunikation zwischen dem Terminal und dem Dienstserver eingerichtet wurde.

11. Verfahren nach einem der Ansprüche 2 bis 10, wobei die Terminalanwendung (20) eine Dienstanwendung ist, **dadurch gekennzeichnet, dass** der spezifische Befehl mit einem Parametersatz parametrisiert ist, welcher Folgendes umfasst:
- eine Kennung einer Telefonnummer eines Dienstservers (11 bis 13), und
- eventuell mindestens einen Anrufparameter,
und dadurch, dass der Schritt der Ausführung des spezifischen Befehls durch das Terminal (3) folgende Schritte umfasst:
- das Terminal versucht, eine Kommunikation mit dem Dienstserver (11 bis 13) gemäß dem Parametersatz herzustellen,;
- ist die Kommunikation mit der Dienstserver (11 bis 13) tatsächlich hergestellt, startet das Terminal (3) die Ausführung des mindestens einen Teils der Dienstanwendung (31, 32), so dass das Terminal den/die Dienst(e), die der Dienstserver anbietet, nutzen kann.

12. Teilnehmeridentifizierungsmodul (4) von der Art, die in einer mobilen Station (2) eines Funkkommunikationssystems (1) enthalten ist und die mit einem Terminal (3) zusammenwirkt, **dadurch gekennzeichnet, dass** es Mittel (16) aufweist, mit denen die Durchführung des Verfahrens gemäß einem der Ansprüche 1 bis 11 zum Starten mindestens eines Teils einer Terminalanwendung (31 bis 33) durch das Terminal unter Steuerung des Teilnehmeridentifizierungsmoduls (4) möglich ist.

13. Terminal (3) von der Art, die in einer mobilen Station (2) eines Funkkommunikationssystems (1) enthalten ist und die mit einem Teilnehmeridentifizierungsmodul (4) zusammenwirkt, **dadurch gekennzeichnet, dass** es Mittel (17) aufweist, mit denen die Durchführung des Verfahrens gemäß einem der Ansprüche 1 bis 11 zum Starten mindestens eines Teils einer Terminalanwendung (31 bis 33) durch das Terminal (3) unter Steuerung des Teilnehmeridentifizierungsmoduls (4) möglich ist.

## Claims

1. A method for launching, via a terminal (3), at least a part of a terminal application (31 to 33), under command of a subscriber identity module (4) cooperating with said terminal, said subscriber identity module and said terminal being included in a mobile station (2) included in a radiocommunication system (1), said subscriber identity module being distributed by an operator,
said method comprising the following steps of:
- said subscriber identity module proposing, during the execution by said subscriber identity module (4) of an operator application (20), also referred to as "operator menu", that a user selects at least one functionality (21 to 23), each functionality corresponding to launching by said terminal of a distinct terminal application using operator parameters that are associated with said functionality, which parameters are stored in said subscriber identity module and correspond to technical choices made by the operator;
- said subscriber identity module sending, if the user selects a functionality, an application launch command to said terminal, which command is configured with the parameters of the operator associated with the selected functionality, so that said terminal launches at least a part of the terminal application that corresponds to the selected functionality, using the operator parameters associated with the selected functionality;
- said terminal executing the application launch command that it receives, so as to launch said at least a part of the terminal application that corresponds to the selected functionality, using the operator parameters associated with the selected functionality, and so as to take over.

2. The method according to claim 1, **characterised in that** it comprises the following steps of:
- said subscriber identity module (4) sending a specific application launch command to said terminal (3), said specific command being specific to said at least a part of the terminal application that corresponds to the selected functionality;
- said terminal executing said specific command, so as to launch said at least a part of the terminal application that corresponds to the selected functionality, and so as to take over.

3. The method according to claim 2, **characterised in that** said specific command belongs to a set comprising a plurality of distinct specific commands, each allowing the launch of at least one distinct part of the terminal application.

4. The method according to any one of claims 2 to 3, **characterised in that** each specific command is a new command of the set of commands of the "SIM Application Toolkit".

5. The method according to claim 1, **characterised in that** it comprises the following steps of:
- said subscriber identity module (4) sending a first generic application launch command to said terminal (3), so that said terminal launches a second specific application launch command, said first generic command being at least configured with an identifier of said second specific command, said second specific command being specific to said at least part of the terminal application that corresponds to the selected functionality;
- said terminal executing said first generic command, so as to extract said second specific command, then executing said second specific command, so as to launch said at least part of the terminal application that corresponds to the selected functionality, and so as take over.

6. The method according to claim 5, **characterised in that** said second specific command belongs to a set comprising a plurality of second distinct specific commands, each allowing at least one distinct part of the terminal application to be launched.

7. The method according to any one of claims 5 to 6, **characterised in that** said second specific command is an "AT" command.

8. The method according to any one of claims 5 to 7, **characterised in that** said first generic command is a new command of the set of commands of the "SIM Application Toolkit".

9. The method according to any one of claims 1 to 8, **characterised in that** said terminal application (31 to 33), at least part of which is launched by said terminal (3), belongs to the group comprising:
- the service applications (31, 32), the execution of which allows said terminal to benefit from the one or more services offered by a service server once communication has been established between said terminal and said service server;
- the message editing applications (33);
- the agenda editing applications.

10. The method according to claim 9, **characterised in that** the following are particularly distinguished from among said service applications:
- the browsers (31) allowing said terminal (3) to browse within an Internet type information network (10), once communication between said terminal and an access platform (11, 12) has been established;
- the payment and/or reservation and/or consultation applications (32) allowing said terminal (3) to benefit from at least one payment and/or reservation and/or consultation service offered by a service server (13), once communication between said terminal and said service server has been established.

11. The method according to any one of claims 2 to 10, with said terminal application (20) being a service application, **characterised in that** said specific command is configured with a set of parameters comprising:
- an identifier of a telephone number of a service server (11 to 13); and
- possibly at least one call parameter,
and **in that** the step of said terminal (3) executing said specific command comprises the following steps:
- said terminal attempting to establish communication with said service server (11 to 13), according to said parameter set;
- said terminal (3) launching, if said communication with said service server (11 to 13) is effectively established, the execution of said at least a part of the service application (31, 32), so that said terminal can benefit from the one or more services offered by said service server.

12. A subscriber identity module (4) of the type included in a mobile station (2) of a radiocommunication system (1) and cooperating with a terminal (3), **characterised in that** it comprises means (16) that allow the implementation of the method, according to any one of claims 1 to 11, for launching, via said terminal, at least part of a terminal application (31 to 33) under the command of said subscriber identity module (4).

13. A terminal (3) of the type included in a mobile station (2) of a radiocommunication system (1) and cooperating with a subscriber identity module (4), **characterised in that** it comprises means (17) that allow the implementation of the method, according to any one of claims 1 to 11, for launching, via said terminal, at least part of a terminal application (31 to 33) under command of said subscriber identity module (4).
